# EUROPEAN PATENT SPECIFICATION

(11) **EP 1 703 604 B1**
(45) Date of publication and mention of the grant of the patent: **21.05.2008**
(21) Application number: 06004876.6
(22) Date of filing: 09.03.2006
(51) Int. Cl.: H02G 3/08, H01B 17/58, H01R 13/58

(54) **Cables lock**
Kabelschloss
Serrure des câbles

(30) Priority: 17.03.2005 IT FI20050043
(43) Date of publication of application: 20.09.2006
(73) Proprietor: Pini, Belisario, 50141 Firenze (IT)
(72) Inventor: Pini, Belisario, 50141 Firenze (IT)
(74) Representative: Strasser, Wolfgang

(56) References cited:
- WO-A-97/12428
- GB-A- 2 068 176
- US-A- 4 036 548
- US-A- 4 618 202
- US-A1- 2004 180 569

## Description

The present invention relates to a cables lock.

More particularly, the present device can be used for clamping the feeding cables of electric appliances, such as lamps, pendants and so on.

WO 97/12428 discloses a cables lock comprising two identical bodies which, in cooperation with each other, define more channels for the passage and the locking of corresponding electric cables, an internal face of each of said bodies being provided with two spaced grooves, said grooves delimiting said channels when the bodies are positioned opposite to each other.

As the device subject of the present invention consists of two identical pieces, it offers evident economical advantages, both in production and in distribution as well as from an operative point of view. Moreover, a device according to the present invention is easy to build, economical and reliable even after a prolonged use.

These and other advantages and characteristics of the invention will be best understood by anyone skilled in this technical field from a reading of the following description in conjunction with the attached drawings, given as a practical example of the invention, but not to be considered in a limitative sense, wherein:
- Fig. 1 is a lateral view of a cables lock according to the present invention in its operating configuration;
- Fig.2 is a schematic vertical section view of the device shown in Fig.1;
- Fig. 3 is a detail of the drawing in Fig.2;
- Fig. 4 is a top plan view of the device shown in Fig.1;
- Fig.5 is a plan view of the device, isolated from holder "S";
- Fig.6 is a schematic perspective view of the device used in Fig. 1;
- Fig. 7 is a schematic perspective exploded view of the device of Fig. 6;
- Fig.8 is a top plan view of one of the pieces constituting the device shown in the previous figures;
- Fig. 9 is a lateral view of the piece shown in Fig.8;
- Figs 10 and 11 are two perspective views of the piece of Fig.8 and Fig.9;
- Fig. 12 is a perspective view of a cables lock according to a further embodiment of the present invention ;
- Fig. 13 is an exploded view of the device of Fig. 12;
- Fig. 14 is a perspective view of one of the two pieces constituting the cables lock of Fig. 14;
- Fig. 15 is a front view of the piece shown in Fig. 14;
- Fig. 16 is a section view along the line X-X of Fig. 15;
- Fig. 17 is a top plan view of the device shown in Fig. 12;
- Fig. 18 is a bottom plan view of the device shown in Fig. 12;
- Fig. 19 is a top plan view of the piece shown in Fig. 14;
- Fig. 20 is a bottom plan view of the piece shown in Fig. 14;
- Figs 21 and 22 are two section views of the device of Fig. 12 in its operating configuration, according to vertical planes which are 90° rotated to each other.

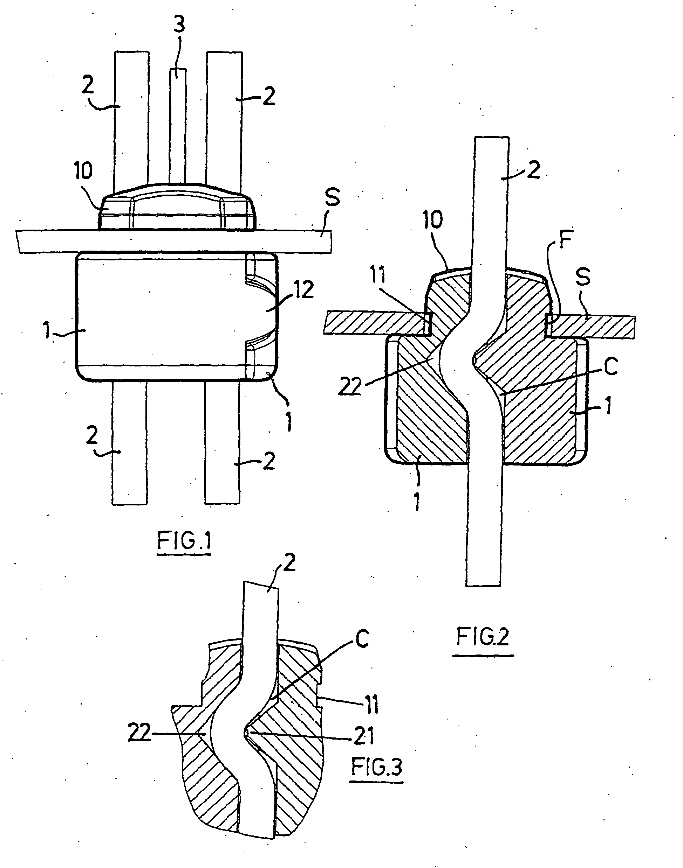

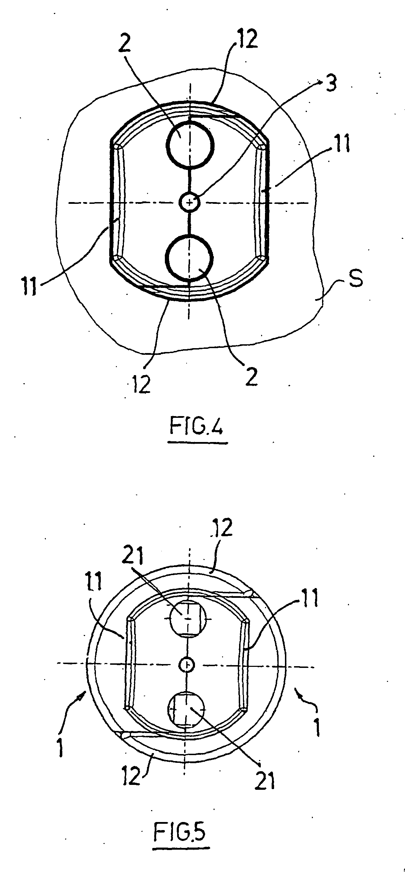

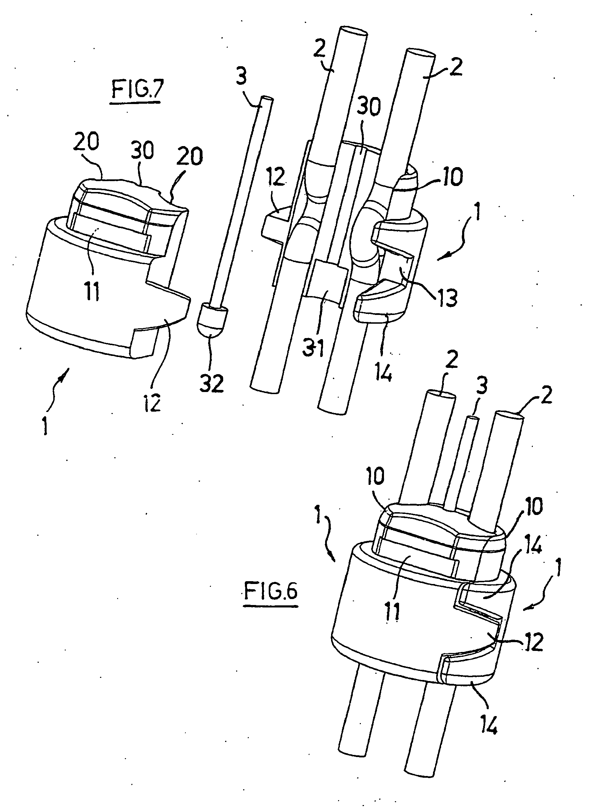

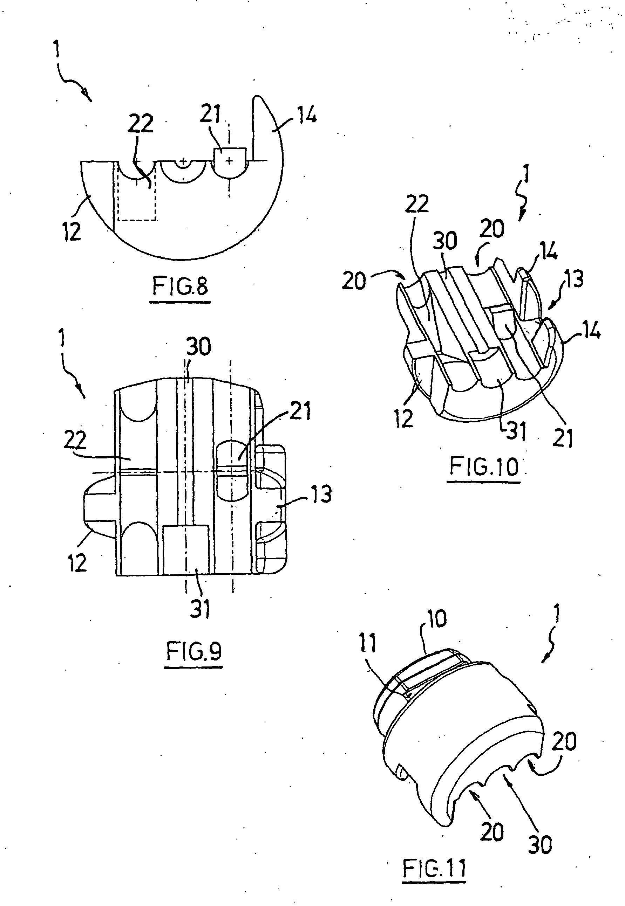

Reduced to its essential structure and with reference to the example shown in Figs 1-11 of the enclosed drawings, a cables lock according to the present invention consists of two identical bodies (1). These bodies face each other and cooperate to define two passage channels for two corresponding electric cables (2) and a third passage channel for a suspension or safety cord (3) for the electric appliance the cables lock is intended for. The channel for cord (3) is in a central position between the other two.

More particularly, the internal face of each of said bodies (1) is provided with a rectilinear central longitudinal groove and with two further grooves (20), provided on both sides of the central groove (30). One of the two lateral grooves features a substantially central projection (21) while the other lateral groove features a corresponding depression (22). In other terms, said projection and said depression are at the same height, so the projection vertex (21) is at the same height as the depression bottom (22). In this way, when the two bodies (1) are placed with their respective faces opposite to each other, cables (2), being flexible, assume a locking configuration between bodies (1) within the channels defined by said grooves. The details of Figs 2,3, and 7 show the configuration assumed by the cables (2) due to their positioning into the channels defined by the above mentioned grooves, being said configuration caused by the fact that a depression (22) on one body corresponds to a projection (21) on the other body. The channel in which the cable (2) of Figs. 2 and 3 is inserted is indicated by reference (C) . In this position, each of the cables is firmly clamped, as it cannot be removed either from the top or from the bottom. In practice, said grooves (20,30) are corresponding semi-channels for cables (2) and for cord (3). Central groove (30) features a flare (31) in which the final end (32) of cord (3) is inserted when the two bodies are opposite to each other while cables (2) are clamped. Each of the two bodies (1) features a head portion (10) provided with a flat groove (11) on the external face of body(1). More particularly, said head portion (10) features a substantially semi-cylindrical structure, said groove (11) resulting provided along a plane parallel to the respective longitudinal axis.

Moreover, each of said bodies (1) features a lateral extension (12) and, on the diametrically opposed side, a corresponding depression (13) defined by two corresponding arms (14).

When using the cables lock, once having positioned the cables (2) passing through grooves (20) and cord (3) passing through central groove (30), the two opposite bodies (1) (with extensions 12 inserted in depressions 13) are connected to a holder (S) by passing the two head portions (10) through a hole (F) of the holder itself and by slightly pressing, so that flat groove (11) of the two head portions (12) is inserted in hole (F). In this way, the two bodies are clamped on each other and, as the surface of grooves (11) is flat, this prevents the two bodies (2) from rotating around the axis of hole (F).

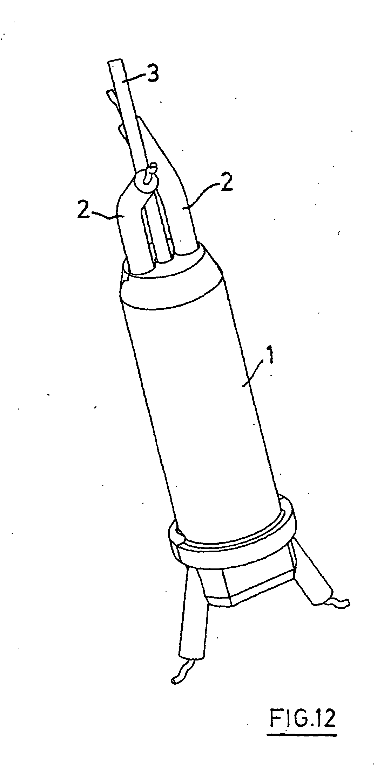

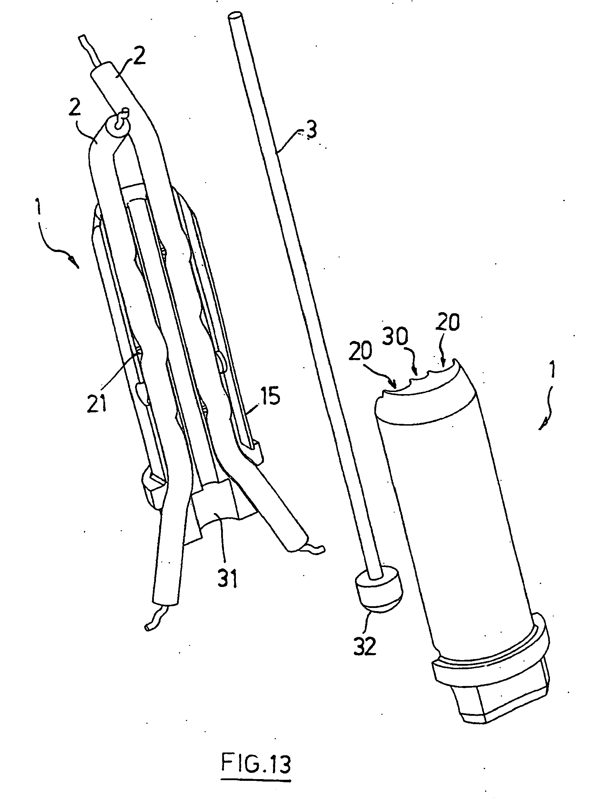

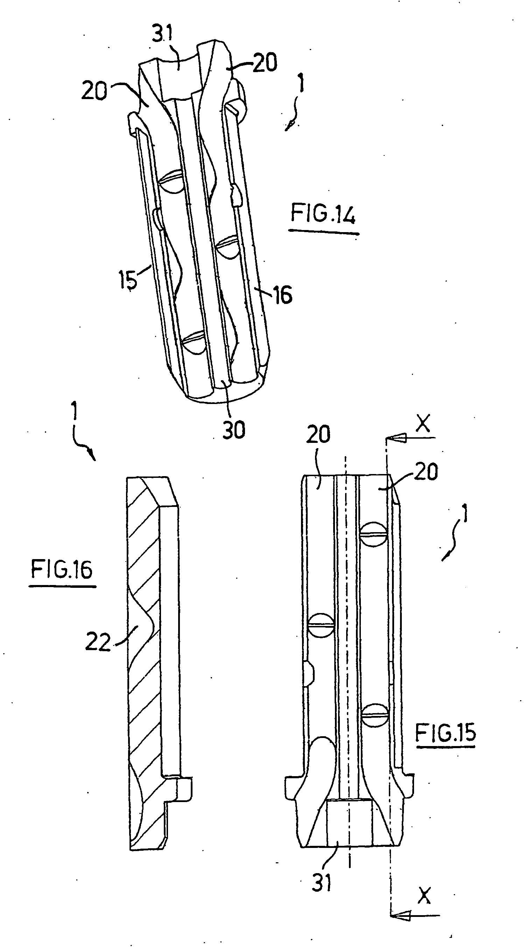

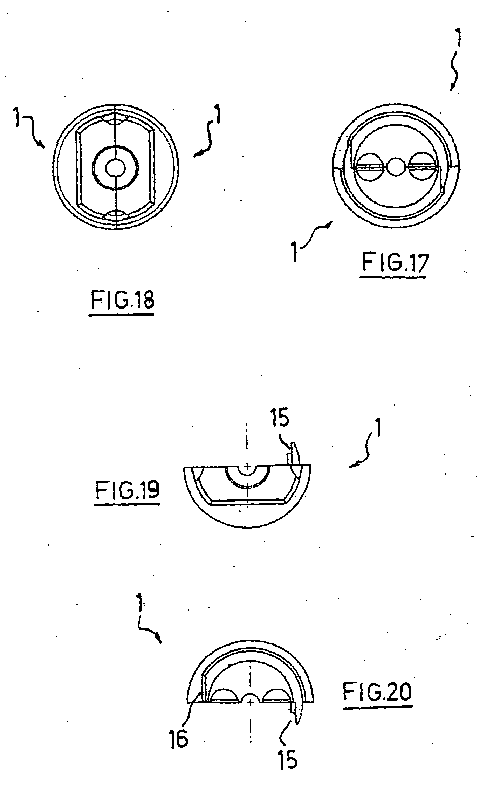

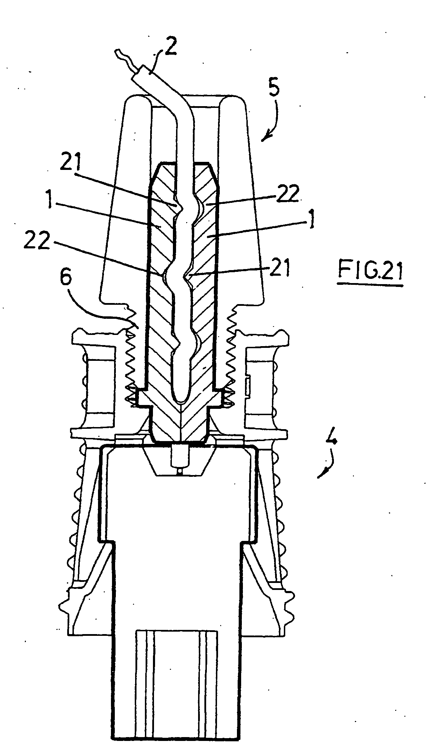

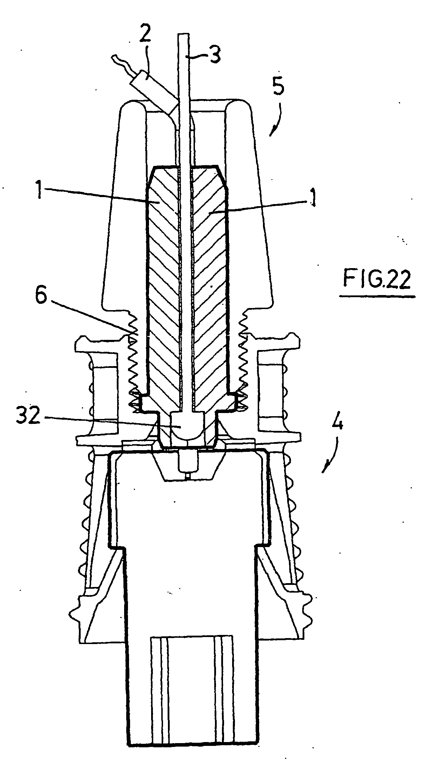

With reference to the example shown in Figs 12-22, where the same numerical references of the example described above are used, the cables lock consists of two identical bodies (1) defining two channels for the passage of two corresponding electric cables (3) and a third channel for the passage of a suspension or safety cord (3) for the electric appliance the cables lock is intended to, being the channel (3) in a central position between the other two. Like in the previous example, the internal face of each of said bodies (1) is provided with a rectilinear longitudinal central groove (30) and with two further grooves on both sides of central groove (30). In this case, however, said bodies (1) are more elongated. Moreover, one of the two lateral grooves features two projections (21) between which there is a depression (22) while the other lateral groove features a depression (22) adjacent to each depression (21) presented by the first one and a projection (21) adjacent to depression (22) of the first one. In other terms, the vertex of each projection (21) of a groove (20) is at the same height as depression (22) of the other groove (20). For example, this cables lock can be used in association with a lamp holder (4). In the example shown in Figs. 21 and 22, in order to carry out the following association, said bodies, positioned opposite to each other, are inserted into a tube (5) and clamped by the internal wall of the same when a respective threaded part (6) is screwed onto the lamp holder base.

Each of the bodies (1) shown in Figs 12-22 features a longitudinal extension (15) on one side of its internal face and an opposite flat surface (16). When bodies (1) face each other, each of said extensions (15) of one body (1) is in contact with a corresponding flat wall (16) of the other body (1).

In both the cases described above, channels (C) defined by said grooves (20) feature curvilinear axes with at least one cusp (see section views in Fig.2, Fig.3 and Fig.21) delimited by a projection (21) and by an opposite depression (22) both belonging to grooves (20) of the two pieces (1) disposed opposite to each other.

The two bodies (1) can be manufactured in plastic material, for example PPS, using the per se known moulding technique.

Practically, the construction details may vary in any equivalent way as far as the shape, dimension, disposition of elements, nature of the used materials are concerned, without nevertheless departing from the scope of the adopted solution idea and, thereby, remaining within the limits of the present claims.

## Claims

1. Cables lock comprising two identical bodies (1) which, in cooperation with each other, define more channels (C) for the passage and the locking of corresponding electric cables, an internal face of each of said bodies being provided with two spaced grooves (20), said grooves (20) delimiting said channels (C) when the bodies (1) are positioned opposite to each other, **characterized in that** a groove is provided with at least a projection (21) and the other groove is provided with at least a corresponding depression (22).

2. Cables lock according to claim 1 **characterized in that** said grooves (20) are provided with a projection (2) and respectively with a corresponding depression (22)

3. Cables lock according to claim 1 **characterized in that** said grooves (20) are provided with two projections (21) and respectively with two corresponding depressions (22)

4. Cables lock according to claim 3 **characterized in that** a depression (22) is provided between two projections (21).

5. Cables lock according to claim 1 **characterized in that** a rectilinear central groove (30) is provided between said grooves (20)

## Patentansprüche

1. Kabelschloss, das zwei identische Körper (1) aufweist, die miteinander zusammenwirken und dabei mehrere Kanäle (C) für das Hindurchtreten und Festlegen von entsprechenden elektrischen Kabeln umschließen, wobei eine Innenfläche eines jeden dieser Körper mit zwei im Abstand angeordneten Rillen (20) versehen ist und wobei diese Rillen (20) die Kanäle (C) bilden, wenn die Körper (1) einander gegenüberliegend angeordnet sind, **dadurch gekennzeichnet, dass** eine Rille mit wenigstens einem Vorsprung (21) und die andere Rille mit wenigstens einer entsprechenden Vertiefung (22) versehen ist.

2. Kabelschloss nach Anspruch 1, **dadurch gekennzeichnet, dass** die Rillen (20) mit einem Vorsprung (21) bzw. mit einer entsprechenden Vertiefung (22) versehen sind.

3. Kabelschloss nach Anspruch 1, **dadurch gekennzeichnet, dass** die Rillen (20) mit zwei Vorsprüngen (21) bzw. mit zwei entsprechenden Vertiefungen (22) versehen sind.

4. Kabelschloss nach Anspruch 3, **dadurch gekennzeichnet, dass** eine Vertiefung (22) zwischen zwei Vorsprüngen (21) vorgesehen ist.

5. Kabelschloss nach Anspruch 1, **dadurch gekennzeichnet, dass** zwischen den beiden Rillen (20) eine geradlinige zentrale Rille (30) vorgesehen ist.

## Revendications

1. Dispositif de blocage pour câbles comprenant deux corps (1) égaux, lesquels, en coopération entre eux, définissent plusieurs canaux (C) pour le passage et le blocage de câbles électriques correspondants, un côté interne de chacun desdits corps (2) étant pourvu de deux rainures (20) éloignée entre elles, lesdites rainures (20) en délimitant lesdits canaux (C) en assiette de corps (1) opposés, **caractérisé en ce que** une rainure est pourvue d'au moins une saille (21) et l'autre rainure est pourvue d'au moins une dépression correspondante (22).

2. Dispositif de blocage pour câbles selon la revendication 1 **caractérisé en ce que** lesdites rainures (20) sont pourvues d'une saillie (21) et respectivement d'une dépression correspondante (22).

3. Dispositif de blocage pour câbles selon la revendication 1 **caractérisé en ce que** lesdites rainures (20) sont pourvues de deux saillies (21) et respectivement de deux dépressions correspondantes (22).

4. Dispositif de blocage pour câbles selon la revendication 3 **caractérisé en ce que** entre les deux saillies (21) il y a une dépression (22).

5. Dispositif de blocage pour câbles selon la revendication 1 **caractérisé en ce que** entre lesdites rainures (20) il y a une rainure rectiligne centrale (30).
